# EUROPEAN PATENT SPECIFICATION

(11) **EP 3 005 972 B1**
(45) Date of publication and mention of the grant of the patent: **07.08.2019**
(21) Application number: 14807381.0
(22) Date of filing: 03.06.2014
(51) Int. Cl.: A61C 3/025, A61C 1/08

(54) **HAND PIECE FOR SPRAYING POWDER**
HANDSTÜCK ZUM ZERSTÄUBEN EINES PULVERS
PIÈCE À MAIN DE PULVÉRISATION DE POUDRE

(30) Priority: 05.06.2013 JP 2013118710; 30.01.2014 JP 2014015535
(43) Date of publication of application: 13.04.2016
(73) Proprietor: Kabushiki Kaisha Sangi, Tokyo 104-8440 (JP); Tohoku University, Sendai-shi, Miyagi 980-8577 (JP)
(72) Inventor: KURIYAGAWA, Tsunemoto, Sendai-shi Miyagi 980-8577 (JP); SAKUMA, Shuji, Tokyo 104-8440 (JP); ISHIZAKI, Tsutomu, Tokyo 104-8440 (JP); OHTA, Kazushi, Tokyo 104-8440 (JP)
(74) Representative: Betten & Resch
(86) International application number: PCT/JP2014/064778
(87) International publication number: WO 2014/196545

(56) References cited:
- EP-A2- 0 407 028
- JP-A- S60 232 147
- JP-A- 2008 200 820
- JP-A- 2008 200 820
- US-A- 4 540 365
- US-A- 4 696 644
- US-A1- 2002 004 188
- US-A1- 2003 180 684
- US-A1- 2012 141 953

## Description

### Technical Field

The present invention mainly relates to a hand piece used for spraying powder in dental treatment.

### Background Art

In a conventional hand piece for spraying powder, it was common that powder which had been powdered in advance was stored in a hand piece or an apparatus connected to a hand piece and the stored powder was sprayed from a spray port.

A dental hand piece for spraying powder according to the preamble of the independent claim is known from US 2012/141953 A1.This document relates to a dental hygiene system which includes a feed line for a liquid that engages and dissolves a dental cleansing compound before being discharged from a nozzle connected to the feed line and sprayed on the teeth for cleaning.

Moreover, the preamble of the independent claim is known from EP 0 407028 A2. This document relates to a device for the administration by inhalation of a medicament in powdered form which comprises a medicament reservoir and metering means for dispensing a dose of medicament from the reservoir, characterized in that the reservoir comprises a compacted body of powdered medicament and the metering means includes means for abrading the compacted body.

US 4 696 644 A relates to an instrument for cleaning teeth by blowing a powdered abrasive thereon which includes a distal nozzle end at which a central conduit has an outlet portion for supplying abrasive and drive gas therefor, and a surrounding annular passage supplying water under pressure. The outlet portion of the central conduit continues beyond an outlet of the annular passage, the outlet being shaped as a restricted annular slot or throttle throat. Thus, a vacuum is created at the outlet portion of the central conduit and this vacuum stabilizes the water jets and thereby counteracts splashes during the use of the instrument.

### Citation List

### Patent Literature

Patent Literature 1: Japanese Patent Publication No. 2001-293009

### Summary of Invention

### Technical Problem

However, in the conventional technique, since it is necessary to store medicine and the like to be sprayed which has been powdered in advance, there has been problems that a hand piece or an apparatus connected to the hand piece must have a storage part of sufficient capacity and that the device is inevitably enlarged.

The present invention provides a small and portable hand piece for spraying powder inside which a pellet is ground to generate the powder.

### Solution to Problem

The present invention is defined in independent claim 1. The dependent claims define embodiments of the invention.

Specifically, the present invention provides the hand piece for spraying powder as follows.

In the invention, a hand piece for spraying powder including a pellet storage part for storing a pellet, a powder generation part for generating powder by grinding the stored pellet, and a spray port for spraying the powder generated in the powder generation part, wherein the powder generation part includes a linear motion actuator for urging the pellet in the pellet storage part, a grinder abutting on the pellet urged by the linear motion actuator, and the vibrator for vibrating the gr**i**nder, is provided.

Based on the invention, the hand piece for spraying powder wherein the powder generation part includes an elastic body for urging the pellet in the pellet storage part, a grinder abutting on the pellet urged by the elastic body, and a vibrator for vibrating the grinder, is provided (but not claimed).

Based on the invention, the hand piece for spraying powder wherein the powder generation part includes the elastic body for urging the pellet in the pellet storage part, the grinder abutting on the pellet urged by the elastic body, and a rotator for rotating the grinder, is provided (but not claimed).

Based on the invention, the hand piece for spraying powder wherein the powder generation part includes the linear motion actuator for urging the pellet in the pellet storage part, the grinder abutting on the pellet urged by the linear motion actuator, and the rotator for rotating the grinder, is provided (but not claimed).

Based on the invention, the hand piece for spraying powder additionally having an acceleration gas pipe which acceleration gas passes through and a powder lead-out pipe for spraying powder by utilizing negative pressure generated by the acceleration gas passing through the acceleration gas pipe via which the powder generation part leads to the spray port, is provided.

Based on the invention, the hand piece for spraying powder wherein the pellet is obtained by compacting hydroxyapatite powder and wherein the spray port is for spraying the hydroxyapatite powder toward a human tooth, is provided.

Based on the invention, the hand piece for spraying powder having a compressed gas cylinder for generating the acceleration gas and a power supply part for supplying the compressed gas cylinder and the powder generation part with power, is provided.

Based on the invention, the hand piece for spraying powder having a gas pump for generating the acceleration gas and a power supply part for supplying the gas pump and the powder generation part with power, is provided.

### Advantageous Effects of Invention

By means of the present invention, a small and portable hand piece for spraying powder inside which a pellet is ground to generate the powder can be provided.

### Description of Embodiments

Embodiments of the present invention will be described below by using the attached drawings. The present invention is not limited to these embodiments and can be put into practice in various modes within a range not departing from its gist. Ebodiments 1 and 2 will be described mainly for claim 1. An embodiment 3 is for exemplary purposes only and does not fall under the scope of the claims. An embodiment 4 will be described mainly for claim 2. An embodiment 5 will be described mainly for claim 3. An embodiment 6 will be described mainly for claims 4 and 5.

### <<Embodiment 1>>

### <Embodiment 1: Outline>

The hand piece for spraying powder of this embodiment is characterized in that powder generated by grinding a pellet inside the hand piece is sprayed from a spray port.

### <Embodiment 1: Structure>

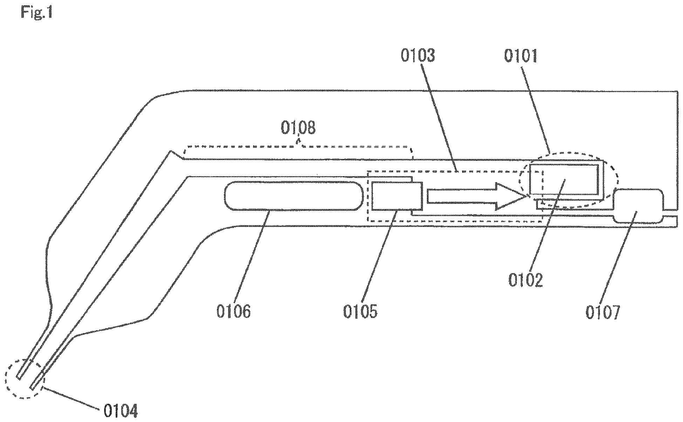

The hand piece for spraying powder of this embodiment includes a pellet storage part, a powder generation part, and a spray port. Refer to Fig. 1. Fig. 1 is a schematic view illustrating the structure of the hand piece for spraying powder of this embodiment.

The "pellet storage part" (0101) is a part for storing a pellet (0102) which provides powder, having a function for fixing and keeping the pellet inside the hand piece. The pellet may be a compression body obtained by compressing powder, or a bulk body which is not made from powder. In the case where the pellet is a compression body, it has an advantage of being easier to grind than in the case where the pellet is a bulk body.

As materials of the pellet, hydroxyapatite, white ceramics powder, colored ceramics powder, organic components, metal powder and the like can be used. Examples of the white ceramics include titanium oxide, aluminum oxide, zirconium oxide, silicon dioxide and the like. Examples of the colored ceramics powder include bismuth oxide and the like. Examples of the organic components include polyacrylic acid methyl powder, a polystyrene sphere, a nylon sphere and the like.

The pellet storage part only needs to have enough capacity to store the pellet. Therefore, in the hand piece for spraying powder of this embodiment, unlike in the conventional technology where powder which has been powdered in advance is stored, powder can be sprayed even with a hand piece which does not have a powder storage part of enough capacity.

The "powder generation part" (0103) is a part which is arranged closely to the pellet storage part, having a function for generating powder from the pellet. As specific configurations of the powder generation part, a configuration where a grindstone-shaped part grinds the pellet, a configuration where a brush powders the pellet by vibration, a configuration where a net-shaped part generates powder by grinding the pellet, a configuration where a propeller-shaped part powders the pellet by rotation and the like can be considered.

The "spray port" (0104) is a part which is connected to the powder generation part, having a function for spraying powder generated in the powder generation part. The shape of the spray port is not limited but preferably circular in manufacturing. It may also be oval so that a spray area can be wide.

The hand piece for spraying powder of this embodiment, in addition to the above essential components, has an actuator for generating powder (0105) for actuating the powder generation part and a power source (0106) of the actuator for generating powder. The actuator for generating powder actuates the powder generation part utilizing energy supplied from the power source. Then, powder is generated from the pellet by action of the powder generation part.

The hand piece for spraying powder of this embodiment, in addition to the above essential components, has a compressed gas cylinder or a gas pump (0107) which supplies gas for making powder flow and a powder flow passage (0108) via which the powder generation part leads to the spray port. Powder generated in the powder generation part is carried to the powder flow passage by a flow of gas supplied from the compressed gas cylinder or the gas pump (which is called supplied gas) passes through the powder flow passage, and is sprayed from the spray port. Various kinds of gas such as air generated by the gas pump, air sealed in the compressed gas cylinder, nitrogen gas, helium gas and the like can be used.

The hand piece for spraying powder of this embodiment can be used toward not only a human tooth but also various objects such as an implant body, bone, glass, a nail, an artificial joint and the like. The hand piece for spraying powder of this embodiment can also be used for wiring on printed boards, spraying conductors and metal powder and the like. In the case where the hand piece for spraying powder of this embodiment is used for purposes other than dental treatment, each of the above components is not limited in size and can be formed in any size.

### <Embodiment 1: Effects>

By means of the present invention, a small and portable hand piece for spraying powder inside which a pellet is ground to generate the powder can be provided.

### <<Embodiment 2>>

### <Embodiment 2: Outline>

The hand piece for spraying powder of this embodiment is characterized by being so configured that the powder generation part grinds the pellet urged by an elastic body by vibration of a grinder abutting on the pellet. The hand piece for spraying powder in which urging the pellet is performed by a linear motion actuator instead of the elastic body will also be described.

### <Embodiment 2: Structure>

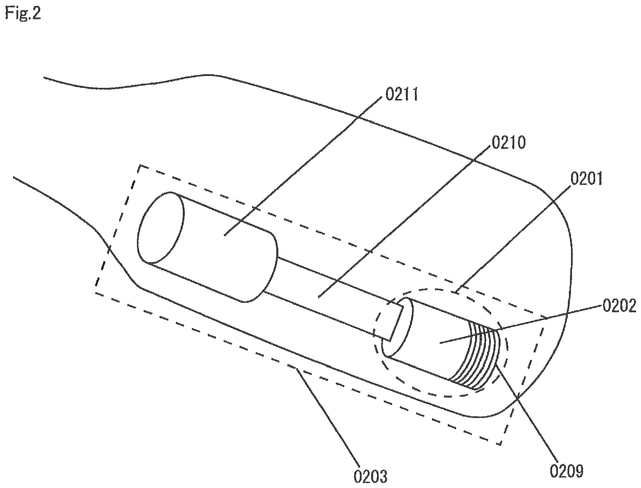

The hand piece for spraying powder of this embodiment includes the pellet storage part, the powder generation part, and the spray port. Since the pellet storage part and the spray port are the same as described in the embodiment 1, the description thereof is omitted. The powder generation part in this embodiment includes an elastic body, a grinder, and a vibrator. Refer to Fig. 2. Fig. 2 is a schematic view illustrating the structure of the powder generation part in the hand piece for spraying powder of this embodiment.

The "elastic body" (0209) is a part with elasticity, having a function for urging the pellet stored in the pellet storage part. Examples of the elastic body in this embodiment include a spring. As the pellet is urged by the elastic body, it is strongly pressed onto the grinder which will be described in detail, thereby grinding efficiency is improved.

It may also be so configured that the pellet is urged by a linear motion actuator. The linear motion actuator is a machine element which converts input energy into linear motion. The linear motion means linear expanding and contracting motion or linear bending and stretching motion. Examples of the linear motion actuator include an air cylinder, an electric cylinder and the like. The air cylinder is a machine element which makes a piston move linearly by compressed air. This air cylinder urges the pellet by imparting pressure. The electric cylinder converts rotary motion of an electric motor into linear motion of a piston and the like. A hydraulic cylinder can also be used. The arrangement position of these linear motion actuators is the same as that of the elastic body. They may be arranged at a position where they can urge the pellet so that it abuts on the grinder. A kind of the linear motion actuator is not particularly limited, but it is preferable to be a small one.

The "grinder" (0210) is a part abutting on the pellet, having a function for grinding the pellet to generate powder. As specific examples of the grinder, a grindstone, a brush, a net, a cutting blade and the like can be considered.

The "vibrator" (0211) is a part interlocking with the grinder, having a function for vibrating the grinder. Examples of the vibrator include an ultrasonic vibrator. For example, when the ultrasonic vibrator vibrates under conditions where the amplitude is around 10 micrometers and the frequency is 65 kilohertz, the grinder vibrates in interlock with the ultrasonic vibrator and the pellet is ground by vibration of the grinder.

The vibrator may also be embodied by a motor. In this case, the motor can vibrate the grinder with an action the amplitude of which is larger than in the case where the ultrasonic vibrator is used. Whether to use the ultrasonic vibrator or the motor as the vibrator may be suitably determined according to material, structure, and composition of the pellet to be ground and the desired diameter (particle size) of powder.

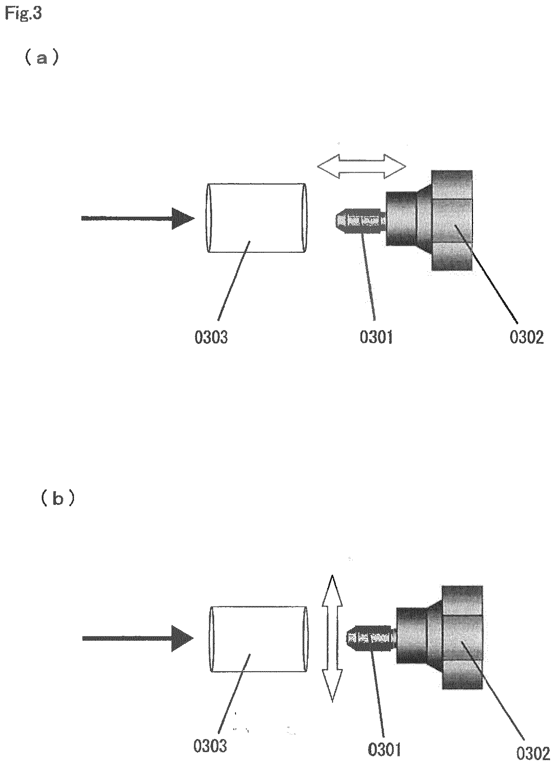

Schematic views of a mode where the vibrator is embodied by the motor are illustrated in Figs. 3. Fig. 3(a) is a schematic view illustrating a mode where the motor makes the grinder reciprocate (move longitudinally) . As illustrated, the grinder (0301) is reciprocated (moved longitudinally) by the motor (0302), thereby the pellet (0303) urged to the grinder is ground. Fig. 3(b) is a schematic view illustrating a mode where the grinder is moved vertically by the motor. As illustrated, the grinder (0301) is moved vertically by the motor (0302), thereby the pellet (0303) urged to the grinder is ground.

The positional relationship between the elastic body or the linear motion actuator for urging the pellet and the grinder is not limited to such a relationship that the grinder is arranged at the spray port side and the elastic body is arranged to face the grinder across the pellet, as illustrated in Fig. 2. That is to say, it may also be so configured that the elastic body or the linear motion actuator is arranged at the spray port side and the grinder is arranged to face the elastic body or the linear motion actuator across the pellet. The arrangement of the elastic body or the linear motion actuator and the grinder can be suitably determined according to the position of the pellet storage part and a storage opening for storing the pellet in the pellet storage part. It is desirable to determine the arrangement of each part considering ease of storing the pellet and the like.

In configuring the powder generation part in this embodiment, the particle size of the generated powder can be changed by controlling a frequency, a cutting amount, and a feeding amount. The generation amount of the powder per unit time can also be changed by controlling a frequency or duty ratio.

### <Embodiment 2: Effects>

By means of the present invention, a small and portable hand piece for spraying powder inside which a pellet is ground to generate the powder can be provided.

### <<Embodiment 3>>

### <Embodiment 3: Outline>

The hand piece for spraying powder of this embodiment is characterized in that it is so configured that the powder generation part grinds the pellet urged by the elastic body by rotation of the grinder abutting on the pellet.

### <Embodiment 3: Structure>

The hand piece for spraying powder of this embodiment includes the pellet storage part, the powder generation part, and the spray port. Since the pellet storage part and the spray port are the same as described in the embodiment 1, the description thereof is omitted. The powder generation part is the same as described in the embodiment 2, except for the following points.

The "powder generation part" of the hand piece for spraying powder of this embodiment includes the elastic body, the grinder, and a rotator. The "rotator" is a part interlocking with the grinder, having a function for rotating the grinder. The motor can be used to embody the rotator, for example.

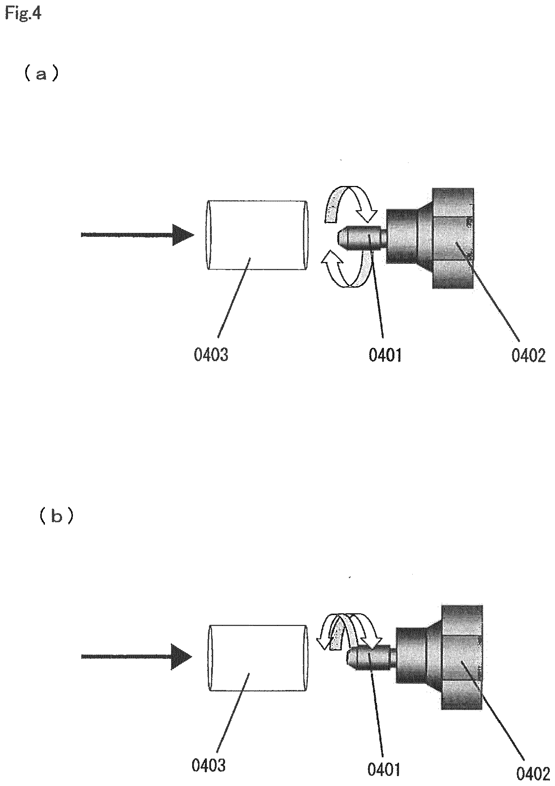

Figs. 4 are schematic views illustrating a mode where the grinder is rotated by the motor. Fig. 4(a) is a mode where the grinder is rotated in one direction continuously. As illustrated, the grinder (0401) is rotated in one direction by the motor (0402), thereby the urged pellet (0403) is ground. Fig. 4(b) is a schematic view illustrating a mode where the grinder alternately repeats clockwise rotation and counterclockwise rotation. As illustrated, the grinder (0401) alternately repeats clockwise rotation and counterclockwise rotation by action of the motor (0402), thereby the urged pellet (0403) is ground.

### <Embodiment 3: Effects>

By means of the present invention, a small and portable hand piece for spraying powder inside which a pellet is ground to generate the powder can be provided.

### <<Embodiment 4>>

### <Embodiment 4: Outline>

The hand piece for spraying powder of this embodiment is characterized by spraying powder utilizing negative pressure generated by acceleration gas.

### <Embodiment 4: Structure>

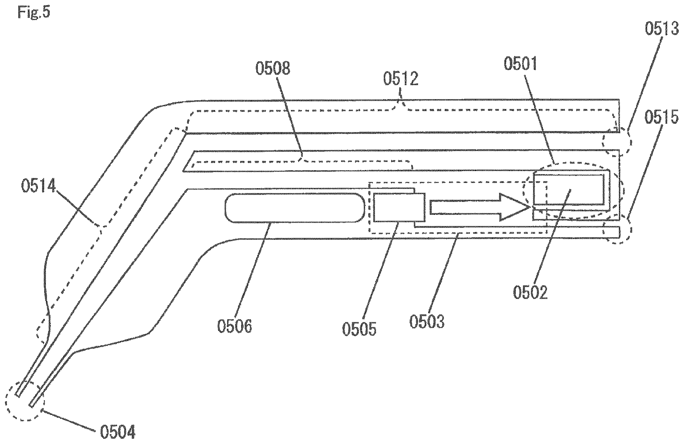

The hand piece for spraying powder of this embodiment includes the pellet storage part, the powder generation part, and the spray port, having an acceleration gas pipe and a powder lead-out pipe in addition. Since the pellet storage part, the powder generation part, and the spray port are the same as described in the embodiment 1, the description thereof is omitted. Refer to Fig. 5. Fig. 5 is a schematic view illustrating the structure of the hand piece for spraying powder of this embodiment.

The "acceleration gas pipe" (0512) is a part which acceleration gas passes through. The acceleration gas is gas supplied from an acceleration gas intake port (0513), having a function for accelerating powder toward the direction of the spray port. The "powder lead-out pipe" (0514) is a part connected to the spray port, having a function for carrying powder to the spray port. Besides an atmosphere, various kinds of gas such as nitrogen gas, helium gas and the like can be used as the acceleration gas. A gas pump and a compressed gas cylinder filled with various kinds of gas can be used to supply the acceleration gas, for example.

The hand piece for spraying powder of this embodiment, in addition to the above essential components, has an actuator for generating powder for actuating the powder generation part, a power source of the actuator for generating powder, a powder flow passage, and supplied gas (0515).

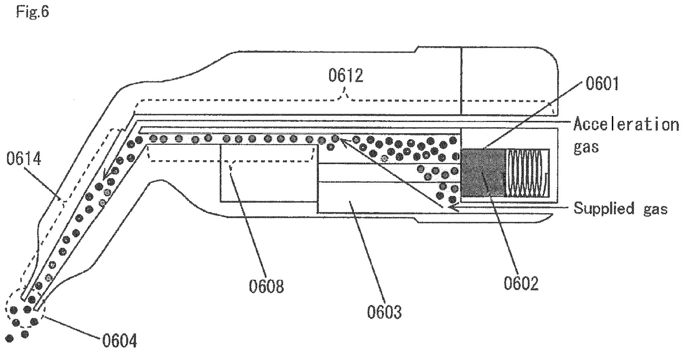

Refer to Fig. 6. Fig. 6 is a schematic view illustrating a flow of powder and air in the hand piece for spraying powder of this embodiment. First, the acceleration gas supplied from the acceleration gas intake port flows into the powder lead-out pipe . Since the powder lead-out pipe is joined with the powder flow passage, air inside the powder flow passage is pulled by the acceleration gas and negative pressure is generated in the powder flow passage and the powder generation part. Then, the powder generated in the powder generation part moves in the direction of the powder lead-out pipe, passes through the powder lead-out pipe, and is sprayed from the spray port. In this way, since powder is carried by negative pressure, an effect of powder being hard to adhere to a pipe wall can be obtained.

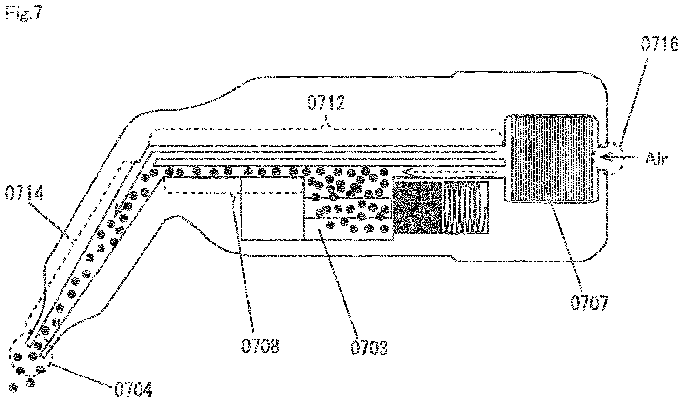

Fig. 7 is a schematic view illustrating another mode of the hand piece for spraying powder of this embodiment. As illustrated, the hand piece for spraying powder has a gas pump (0707), by which air is taken in from an air intake port (0716), the acceleration gas is supplied to the acceleration gas pipe (0712), and supplied gas is supplied to the powder flow passage (0708) via the powder generation part (0703) . The powder flows in the direction of the powder lead-out pipe (0714) by a flow of the supplied gas and negative pressure generated by the acceleration gas and is sprayed from the spray port (0704) after passing through the powder lead-out pipe. The gas pump in this mode may be replaced with a compressed gas cylinder.

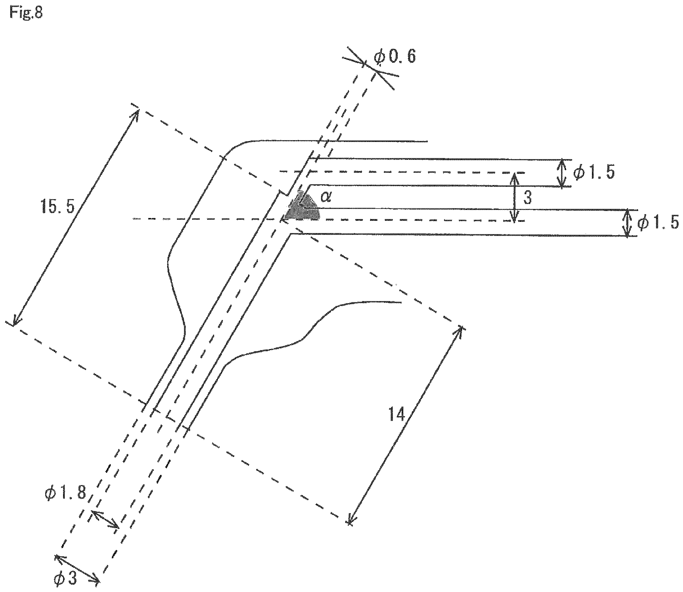

Fig. 8 is a view illustrating an example of the shape in the vicinity of the spray port in the hand piece for spraying powder of this embodiment. The shape in the vicinity of the spray port is not limited as long as it is suitable for spraying powder, but it is preferable to be formed as illustrated in Fig. 8. In the case where the hand piece for spraying powder of this embodiment is used in dental treatment, it is preferable to set the angle α to be 45° to 90° , and it is the most preferable to set the angle α to be 60° to 90°.

### <Embodiment 4: Effects>

In the hand piece for spraying powder of this embodiment, the ground powder is smoothly carried from the powder generation part to the spray port by action of negative pressure, and powder can be sprayed continuously and effectively. By means of the present invention, a small and portable hand piece for spraying powder inside which a pellet is ground to generate the powder can be provided.

### <<Embodiment 5>>

### <Embodiment 5: Outline>

The hand piece for spraying powder in this embodiment is characterized by being used for spraying powder generated by grinding a pellet obtained by compacting hydroxyapatite powder toward a human tooth for the purpose of dental treatment.

### <Embodiment 5: Structure>

The hand piece for spraying powder of this embodiment includes the pellet storage part, the powder generation part, and the spray port. Since the powder generation part is the same as described in the embodiment 1, the description thereof is omitted. The pellet storage part and the spray port are the same as described in the embodiment 1, except for the following points.

The "pellet storage part" of the hand piece for spraying powder of this embodiment is characterized by storing a pellet obtained by compacting hydroxyapatite powder. "Hydroxyapatite" is a kind of calcium phosphate and is used for medicine, dental material, toothpaste, cosmetics and the like because of its high biocompatibility.

The "spray port" of the hand piece for spraying powder of this embodiment is characterized by being used for spraying the hydroxyapatite powder toward a human tooth. For example, a user spray the hydroxyapatite powder generated in the powder generation part toward a tooth of a person to be treated for repair and recalcification of enamel or plaque removing in dental treatment.

In the hand piece for spraying powder of this embodiment, all of the spray port, the acceleration gas pipe, and the powder lead-out pipe are preferably so formed that the diameter is in the range of from 0.1mm to 30mm. It is the most preferable that the diameter is in the range of from 0.5mm to 10mm.

### <Embodiment 5: Effects>

By means of the present invention, a small and portable hand piece for spraying powder inside which a pellet is ground to generate the powder can be provided.

### <<Embodiment 6>>

### <Embodiment 6: Outline>

The hand piece for spraying powder of this embodiment is characterized by being used in a completely cordless manner since it has a compressed gas cylinder and a power supply part.

### <Embodiment 6: Structure>

The hand piece for spraying powder of this embodiment includes the pellet storage part, the powder generation part, and the spray port, having a compressed gas cylinder or a gas pump and a power supply part in addition. Since the pellet storage part, the powder generation part, and the spray port are the same as described in the embodiment 1, the description thereof is omitted.

The "compressed gas cylinder" is a part filled with gas, having a function for artificially producing a flow of air by jetting gas to generate the acceleration gas. The "gas pump" has a function for imparting kinetic energy to gas to generate the acceleration gas. The impeller type, the diaphragm type, the piston type and the like are specific methods for the gas pump.

The "power supply part" is a part which supplies power needed for the compressed gas cylinder and the powder generation part to operate. Specifically, a lithium battery and the like can be considered. The power supply part may be configured to supply power needed for the vibrator, the rotator, the linear motion actuator and the like to operate.

### <Embodiment 6: Effects>

By means of the present invention, a small and portable hand piece for spraying powder inside which a pellet is ground to generate the powder, which can be used in a completely cordless manner, can be provided.

### Brief Description of Drawings

[Fig. 1] a schematic view illustrating the structure of the hand piece for spraying powder of embodiment 1
[Fig. 2] a schematic view illustrating the structure of the powder generation part in the hand piece for spraying powder of embodiment 2
[Figs. 3] schematic views illustrating the mode of the vibrator in the hand piece for spraying powder of embodiment 2
[Figs. 4] schematic views illustrating the mode of the rotator in the hand piece for spraying powder of embodiment 3
[Fig. 5] a schematic view illustrating the structure of the hand piece for spraying powder of embodiment 4
[Fig. 6] a schematic view illustrating a flow of powder and air in the hand piece for spraying powder of embodiment 4
[Fig. 7] a schematic view illustrating another mode of the hand piece for spraying powder of embodiment 4
[Fig. 8] a view illustrating an example of the shape in the vicinity of the spray port in the hand piece for spraying powder of embodiment 4

### Reference Numerals

- 0101: pellet storage part
- 0102: pellet
- 0103: powder generation part
- 0104: spray port
- 0105: actuator for generating powder
- 0106: power source of actuator for generating powder
- 0107: gas pump, or compressed gas cylinder
- 0108: powder flow passage
- 0209: elastic body
- 0210: grinder
- 0211: vibrator
- 0512: acceleration gas pipe
- 0513: acceleration gas intake port
- 0514: powder lead-out pipe
- 0515: supplied gas intake port
- 0716: air intake port

## Claims

1. A dental hand piece for spraying powder comprising:
a pellet storage part (0101) for storing a pellet (0102);
a powder generation part (0103) for generating powder by grinding the stored pellet (0102); and
a spray port (0104) for spraying the powder generated in the powder generation part (0103),
**characterized in that**
the powder generation part (0103) comprises
a linear motion actuator for urging the pellet (0102) in the pellet storage part (0101),
a grinder (0210) abutting on the pellet (0102) urged by the linear motion actuator, and
a vibrator (0211) for vibrating the grinder (0210).

2. The dental hand piece for spraying powder according to claim 1 additionally having
an acceleration gas pipe (0512) through which acceleration gas passes and
a powder lead-out pipe (0514) for spraying powder utilizing negative pressure generated from the acceleration gas passing through the acceleration gas pipe (0512), wherein via the powder lead-out pipe (0514) powder is lead from the powder generation part (0103) to the spray port (0104).

3. The dental hand piece for spraying powder according to any of claims 1 to 2,
wherein the pellet (0102) is obtained by compacting hydroxyapatite powder, and
wherein the spray port (0104) is for spraying the powder toward a human tooth.

4. The dental hand piece for spraying powder according to any of claims 1 to 3 having
a compressed gas cylinder for generating the acceleration gas and
a power supply part for supplying the compressed gas cylinder and the powder generation part (0103) with power.

5. The dental hand piece for spraying powder according to any of claims 1 to 4 having
a gas pump for generating the acceleration gas and
a power supply part for supplying the gas pump and the powder generation part (0103) with power.

## Patentansprüche

1. Dentalhandstück zum Sprühen eines Pulvers, umfassend folgendes:
einen Pelletspeicherteil (0101) zum Speichern eines Pellets (0102);
einen Pulvererzeugungsteil (0103) zum Erzeugen von Pulver durch Zermahlen des gespeicherten Pellets (0102); und
eine Sprühöffnung (0104) zum Sprühen des Pulvers, das in dem Pulvererzeugungsteil (0103) erzeugt ist,
**dadurch gekennzeichnet, dass**
der Pulvererzeugungsteil (0103) folgendes umfasst:
einen Linearbewegungsaktor zum Beaufschlagen des Pellets (0102) in dem Pelletspeicherteil (0101),
ein Mahlwerk (0210), das an dem Pellet (0102) anliegt, das durch den Linearbewegungsaktor beaufschlagt wird, und
eine Vibrationseinrichtung (0211) zum Vibrierenlassen des Mahlwerks (0210).

2. Dentalhandstück zum Sprühen von Pulver nach Anspruch 1, zusätzlich umfassend ein Beschleunigungsgasrohr (0512), durch das Beschleunigungsgas hindurch passiert, und
ein Pulverauslassrohr (0514) zum Sprühen von Pulver unter Verwendung eines Unterdrucks, der dadurch erzeugt wird, dass das Beschleunigungsgas durch das Beschleunigungsgasrohr (0512) passiert, wobei Pulver über das Pulverauslassrohr (0514) von dem Pulvererzeugungsteil (0103) zu der Sprühöffnung (0104) geleitet wird.

3. Dentalhandstück zum Sprühen von Pulver nach einem der Ansprüche 1 bis 2,
wobei das Pellet (0102) durch Kompaktieren von Hydroxylapatit-Pulver erhalten ist, und
wobei die Sprühöffnung (0104) zum Sprühen des Pulvers in Richtung eines menschlichen Zahns ausgelegt ist.

4. Dentalhandstück zum Sprühen von Pulver nach einem der Ansprüche 1 bis 3, umfassend:
einen Kompressionsgaszylinder zum Erzeugen des Beschleunigungsgases, und
einen Energieversorgungsteil zum Versorgen des Kompressionsgaszylinders und des Pulvererzeugungsteils (0103) mit Energie.

5. Dentalhandstück zum Sprühen von Pulver nach einem der Ansprüche 1 bis 4, umfassend:
eine Gaspumpe zum Erzeugen des Beschleunigungsgases, und
einen Energieversorgungsteil zum Versorgen der Gaspumpe und des Pulvererzeugungsteils (0103) mit Energie.

## Revendications

1. Pièce à main dentaire pour pulvériser une poudre, comprenant :
une partie de stockage de pastille (0101) pour stocker une pastille (0102) ;
une partie de production de poudre (0103) pour produire une poudre par broyage de la pastille stockée (0102) ; et
un orifice de pulvérisation (0104) pour pulvériser la poudre produite dans la partie de production de poudre (0103),
**caractérisée en ce que**
la partie de production de poudre (0103) comprend
un actionneur à mouvement linéaire pour pousser la pastille (0102) dans la partie de stockage de pastille (0101),
un broyeur (0210) en butée sur la pastille (0102) poussée par l'actionneur à mouvement linéaire, et
un vibreur (0211) pour faire vibrer le broyeur (0210).

2. Pièce à main dentaire pour pulvériser une poudre selon la revendication 1, comportant en outre
un tuyau de gaz d'accélération (0512) par lequel passe un gaz d'accélération et
un tuyau de sortie de poudre (0514) pour pulvériser une poudre en utilisant la pression négative produite par le gaz d'accélération passant dans le tuyau de gaz d'accélération (0512), dans laquelle par l'intermédiaire du tuyau de sortie de poudre (0514), une poudre est amenée de la partie de production de poudre (0103) à l'orifice de pulvérisation (0104).

3. Pièce à main dentaire pour pulvériser une poudre selon l'une quelconque des revendications 1 et 2,
dans laquelle la pastille (0102) est obtenue par compactage de poudre d'hydroxyapatite, et
dans laquelle l'orifice de pulvérisation (0104) est destiné à pulvériser la poudre en direction d'une dent humaine.

4. Pièce à main dentaire pour pulvériser une poudre selon l'une quelconque des revendications 1 à 3, comportant
un cylindre de gaz comprimé pour produire le gaz d'accélération et
une partie d'alimentation électrique pour alimenter le cylindre de gaz comprimé et la partie de production de poudre (0103) en courant électrique.

5. Pièce à main dentaire pour pulvériser une poudre selon l'une quelconque des revendications 1 à 4, comportant
une pompe à gaz pour produire le gaz d'accélération et
une partie d'alimentation électrique pour alimenter la pompe à gaz et la partie de production de poudre (0103) en courant électrique.
